# EUROPEAN PATENT SPECIFICATION

(11) **EP 2 085 169 B1**
(45) Date of publication and mention of the grant of the patent: **11.07.2012**
(21) Application number: 09151652.6
(22) Date of filing: 29.01.2009
(51) Int. Cl.: B23D 21/04

(54) **Pipe cut-off apparatus**
Rohrschneidevorrichtung
Appareil de coupe de tuyaux

(30) Priority: 30.01.2008 CA 2619162
(43) Date of publication of application: 05.08.2009
(73) Proprietor: Lupke, Manfred Arno Alfred, Thornhill Ontario L3T 1W6 (CA); Lupke, Stefan A., Thornhill, Ontario L3T 1X6 (CA)
(72) Inventor: Lupke, Manfred Arno Alfred, Thornhill Ontario L3T 1W6 (CA); Lupke, Stefan A., Thornhill, Ontario L3T 1X6 (CA)
(74) Representative: Thum, Bernhard

(56) References cited:
- EP-A- 0 860 228
- DE-C- 855 347
- GB-A- 2 120 591
- US-A- 5 605 083

## Description

### FIELD OF THE INVENTION

The present invention relates to a pipe cutting apparatus for cutting of extruded pipe.

### BACKGROUND OF THE INVENTION

Various arrangements have been used and proposed with respect to cutting of pipe, and in particular, inline cutting of pipe as the pipe is being extruded. Such pipe cutting arrangements can use a number of different drives such as hydraulic drives, pneumatic drives or electric drives for moving of a cutting blade to cut through the wall of the pipe, typically as the cutter is rotated about the pipe.

One of our earlier pipe cutting structures is shown in United States Patent 5,605,083. This pipe cutting apparatus includes a first rotational drive for rotating a collar having one or more cutters mounted on the collar. As the collar rotates, the cutters rotate around the pipe as the pipe passes through the centre of the device.

The cutter includes a separate drive including a ring gear bearingly supported on the collar. This ring gear engages with a drive gear of the cutter and the cutter is moved in a radial manner into or out of the pipe. The ring gear is also rotatably driven and the speed of the ring gear is controlled relative to the collar. A slight change in speed of the ring gear relative to the collar will cause the cutter to move into or out of the pipe. If the ring gear and the collar rotate at the same speed there is no radial movement of the knife.

The pipe cutting apparatus shown in this patent is mounted on a slidable table to allow cutting of the pipe as the pipe continues to be extruded. Basically, the pipe is clamped and once the pipe is clamped the cutting apparatus continues to move with the extruded pipe due to the slide mount of the table. If this arrangement is used to perform a second cut of the pipe, the pipe is released by the clamp arrangement and there is movement of the pipe relative to the cutting apparatus and the pipe is then subsequently clamped and cut.

DE 855 347 discloses a pipe cutting apparatus comprising a support arm with a pivot axis. At the end of the support arm distant from the pivot axis a rotating blade is provided adapted to cut a pipe. By pivoting the support arm, the rotating blade is brought into contact with the pipe in order to perform the pipe cutting operation.

This document is considered to disclose the preamble of the independent claim.

The prior art pipe cutting arrangements, including our own earlier United States Patent 5,605,083,are difficult to adjust for wide variations in the diameter of the pipe being extruded, and the degree of control with respect to the cutting process and cutting speeds is not as precise as would be desired. Furthermore these arrangements are difficult to precisely locate a first cut relative to a second cut. The present invention seeks to overcome a number of these problems.

### SUMMARY OF THE INVENTION

A pipe cut-off apparatus comprises a machine base having a first machine table slidable in a predetermined direction for moving with a pipe during the extrusion thereof. The first machine table rotatably supports a base tube with the base tube positioned to allow a pipe to pass therethrough. A pipe clamp arrangement is aligned with and to one side of the base tube for clamping of the pipe during a pipe cutting procedure. A rotatable drive for the base tube rotates the base tube about a longitudinal axis thereof. At least one cutting arrangement is provided. Each cutting arrangement includes a mounting bracket attached to the base tube at a peripheral position, a support arm having a pivot shaft connecting the support arm to the mounting bracket and a drive gear secured on the pivot shaft. Each support arm includes a pipe cutting tool at an end of the support arm spaced from the pivot shaft. A drive arrangement is provided in engagement with the drive gear of the support arm for controlling pivoting movement of the support arm in a pipe cutting procedure coordinated with the rotation of the base tube to cause the cutting tool to cut the pipe into two pipe segments.

The ring gear is rotatably mounted and coaxial with said base tube, said ring gear being rotatably driven relative to said rotatable drive of said base tube to cause said support arm to pivot and move said cutting tool during said pipe cutting procedure from a clear position to a pipe cut position and returning said cutting tool to said dear position. Each support arm includes a gear box reduction arrangement in mesh with said ring gear for controlling said pivoting of said support arm of each cutting arrangement.

In an aspect of the invention the ring gear includes a separate motor drive coordinated with the rotatable drive of said base tube and using a speed differential . to control the position of said support arm of each cutting arrangement.

According to an aspect of the invention, the ring gear is rotatably mounted on the base tube.

In a further aspect of the invention the motor drive of the ring gear and the rotatable drive of the base tube are coordinated and the relative speeds of the motor drive of the ring gear and the rotatable drive of the base tube are intermittently varied to cause the pivoting of each support arm during the cutting procedure.

In an aspect of the invention the rotatable drive of the base tube and the motor drive of the ring gear are driven to generally synchronize the rotational speed of the ring gear and the base tube with intermittent controlled variation in these rotational speeds causing the pivoting of each support arm.

In an aspect of the invention the pipe clamp arrangement is supported by the first slidable table.

In a further aspect of the invention the pipe cutting apparatus includes a second slidable table mounted on the first slidable table and moveable in the direction of the longitudinal axis of the pipe. The second slidable table has said pipe clamp arrangement mounted thereon.

In a further aspect of the invention a pipe locating device is provided for positioning the pipe in the pipe cutting apparatus for cutting of the pipe in at least one predetermined position. The pipe locating device determines the position of the device relative to the pipe cutting tool for cutting in at least one predetermined position.

In a further aspect of the invention the pipe locating device is mounted on the second slidable table and said first slidable table is moved relative to the second slidable table for cutting of said pipe in a second predetermined position.

### BRIEF DESCRIPTION OF THE DRAWINGS

Preferred embodiments of the invention are shown in the drawings, wherein:
Figures 1 and 2 are perspective views of the pipe cutting apparatus;
Figure 3 is a horizontal sectional view through the pipe cutting apparatus showing a first cutting position of the pipe cutter;
Figure 4 is a horizontal sectional view through the pipe cutting apparatus similar to Figure 2 where the pipe has been cut at a second predetermined position.
Figure 5 is a side view of the pipe cutting apparatus;
Figure 6 is an end view of the pipe cutting apparatus;
Figure 7 is a perspective view of a support arm of the cutting mechanism of the pipe cutting apparatus; and
Figure 8 is a partial side view of an alternate drive arrangement.

### DETAILED DESCRIPTION OF THE PREFERRED EMBODIMENTS

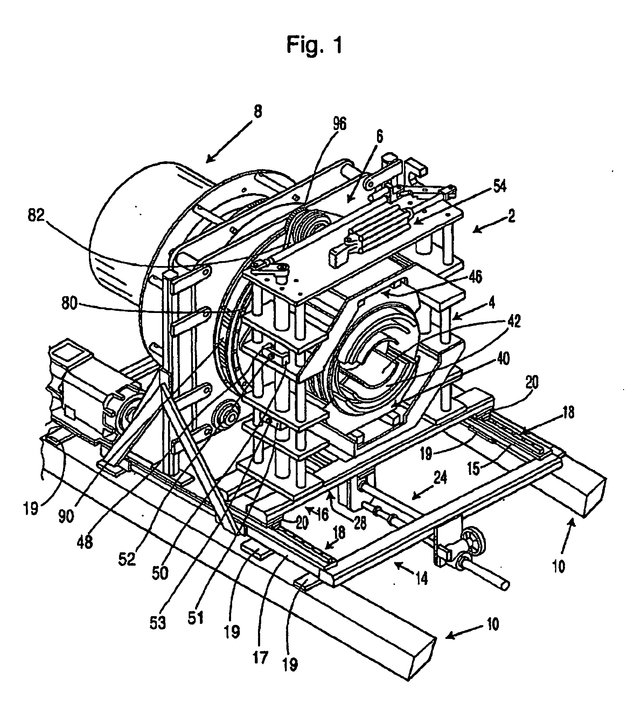

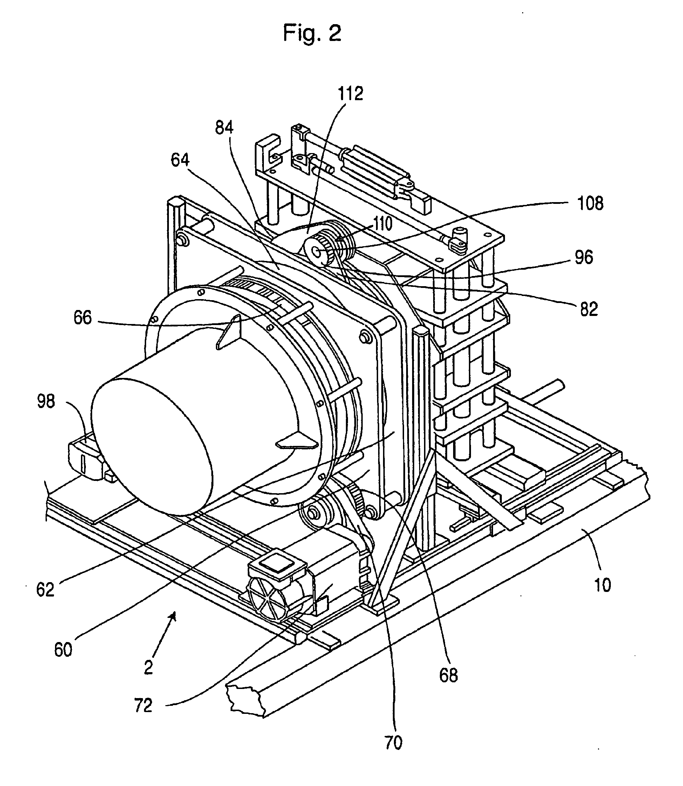

The inline pipe cutoff apparatus 2 is shown in Figures 1 and 2 and includes a pipe clamping arrangement 4, a rotating cutter 6 and a support tube 8. The pipe cutting apparatus 2 is mounted on a machine base 10 and includes a first slidable table 14 and preferably a second slidable table 16. The second slidable table 16 supports the pipe clamping arrangement 4. With this arrangement there can be relative movement between the pipe clamping arrangement 4 and the rotating cutter 6. This ability to alter the position of the rotating cutter 6 relative to the pipe clamping arrangement 4 allows for precision placement with respect to locating a first cut in the pipe followed by locating a second cut while the pipe remains clamped.

As can be appreciated, this cutting arrangement is preferably used as an in-line pipe cutting apparatus and the pipe that is being cut continues to advance at the extrusion speed. The second slidable table 16 is effectively secured to the pipe by the pipe clamping arrangement 4. Thus the pipe clamping arrangement 4 will move at the production speed of the pipe. The first slidable table 14 is initially set relative to the second slidable table 16 such that the pipe cutting arrangement 6 is at a desired position relative to the pipe clamping arrangement 4. After completing a first cut at a desired location, typically the rotating cutter 6 is moved towards the pipe clamping arrangement 4 and a second cut is performed. The use of two slidable tables allows for two spaced cuts while maintaining the pipe clamped. As can be appreciated more than two cuts can be completed.

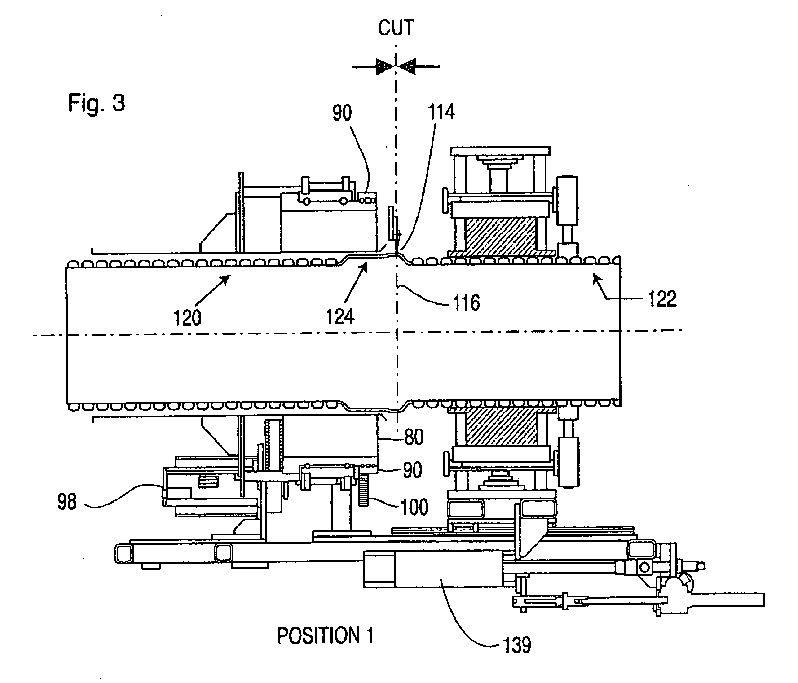

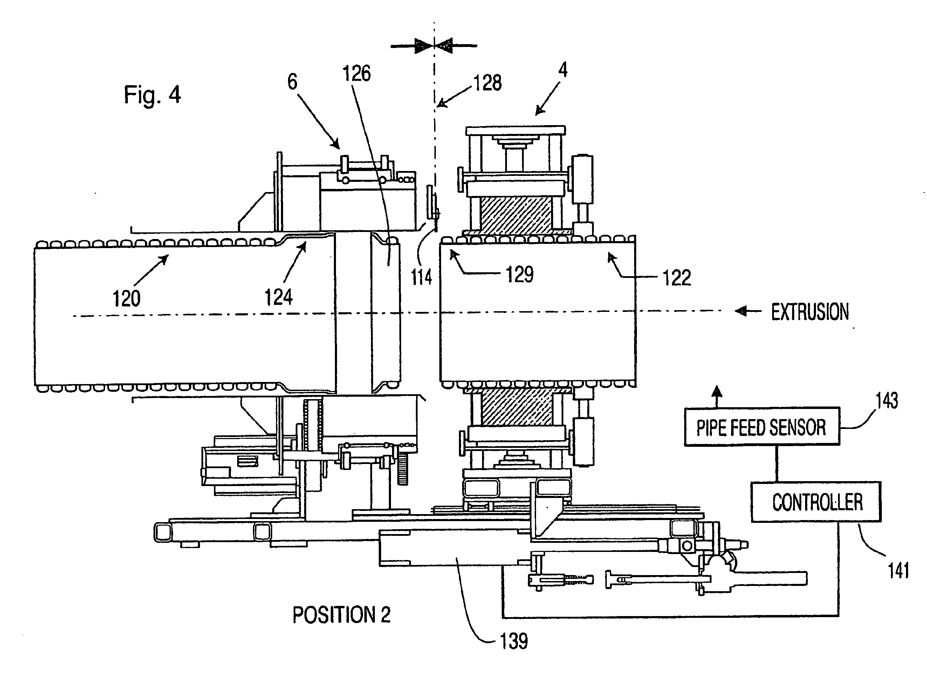

Additional details of the two slidable tables are described with respective Figures 3 and 4. The first slidable table 14 includes two opposed slide rails 15 and 17 having slide slots on their bottom surfaces and these rails are secured to the machine base 10 by a series of securing blocks 19. In this way the first slidable table 14 can move relative to the machine base 10.

The first slidable table 14 and the second slidable table 16 typically include an adjustable and programmable actuator secured therebetween that controls the relative position of the tables. This actuator is used to move the rotating cutter 6 towards or away from the pipe clamping arrangement 4 and allows for precision cutting of the pipe at two or more locations while the pipe remains clamped within the clamping arrangement 4.

The adjustable actuator located between the two slidable tables can be a numeric controlled activator programmed for specific cuts for different sizes of pipe. For example the cutting of a coupler, as shown in Figure 4, is known for each size of pipe being manufactured. The position of the cuts can be preprogrammed for different pipe sizes such that an operator merely selects the pipe size and thereafter adjustment of the cutter can occur. Although two predetermined cuts are described further cuts may also be made.

In some cases it is desirable to make 4 cuts with the first two cuts for removing scrap portion 126 (shown in Figure 4) and two further cuts associated with pipe section 122 for removing a quality control section for testing.

The second slidable table 16 includes opposed slide tracks 18 fixedly secured to the first slidable table 14 and slide blocks 20 secure the pipe clamping arrangement 4 to the first slidable table 14.

The alternate manual adjustment arrangement 24 allows adjustment of the end positions of a positioning cylinder actuator 28. This allows the operator to adjust the respective movements of the first and second tables between two precise end positions. These end positions typically change between different pipe sizes.

The pipe clamping arrangement 4 includes a moveable bottom clamp guide 40 and a moveable upper clamp 46. These members effectively move towards or away from one another by rotation of the screw shafts 48. Figure 1 shows a number of different inserts 42 that are selectively secured to the clamping arrangement 4 for engaging different sizes of pipes. These inserts are easily inserted or removed from the clamp arrangement in accordance with the size of the pipe being produced. The screw shafts 42 cooperate with the support blocks 50 and 51 secured to the upper clamp 46 and the bottom clamp 40 respectively. Pins 52 and 53 of the support blocks engage the screw shaft and position the clamp members in accordance with the position of the screw shaft 48. The rotational position of the screw shaft 48 is controlled by the linkage 56 that is in engagement with the positioning cylinder 54. This provides an effective arrangement for engaging the pipe. The screw shafts have two thread shapes to move the clamps towards or away from each other.

The rotating cutter 6 includes a rotating base tube 80 that extends through the opposed support plates 60 and 62 secured to the first slidable table 14. The rotating base tube 80 is supported by the bearing arrangement 64 and as such can be rotated at a relatively high speed. The rotational drive for the rotating base tube 80 is provided by the large drive gear 66 secured to the periphery of the rotating base tube 80. The large drive gear is in mesh with a smaller gear 68 that is driven by the belt drive 70 which in turn is driven by the motor 72. Therefore the motor 72 precisely controls the rotational speed of the rotating base tube 80.

A mounting bracket 82 is fixed on the rotating base tube 80 and supports the cutting arrangement 84. The rotating base tube 80 extends through the two support plates and also supports the independent ring gear 90 on the rotating base tube 80 by means of bearings. Thus the position of the independent ring gear 90 relative to the base tube 80 is easily changed and there is no mechanical connection causing the ring gear 90 to rotate with the base tube 80. In fact, in one embodiment, independent ring gear 90 includes its own drive arrangement and this drive arrangement is controlled to provide a desired rotational relationship between the rotating base tube 80 and the independent ring gear 90 used to control the cutting arrangement 84. A computer controller can be used to control the two drives.

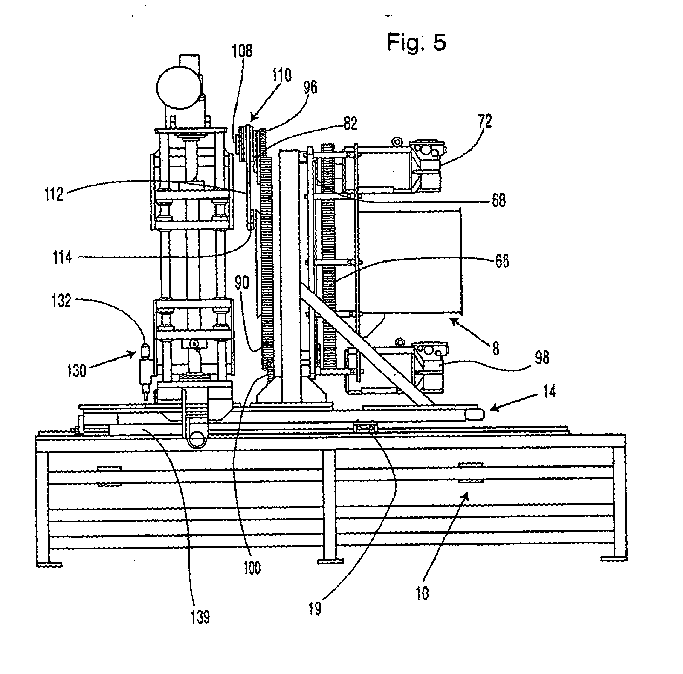

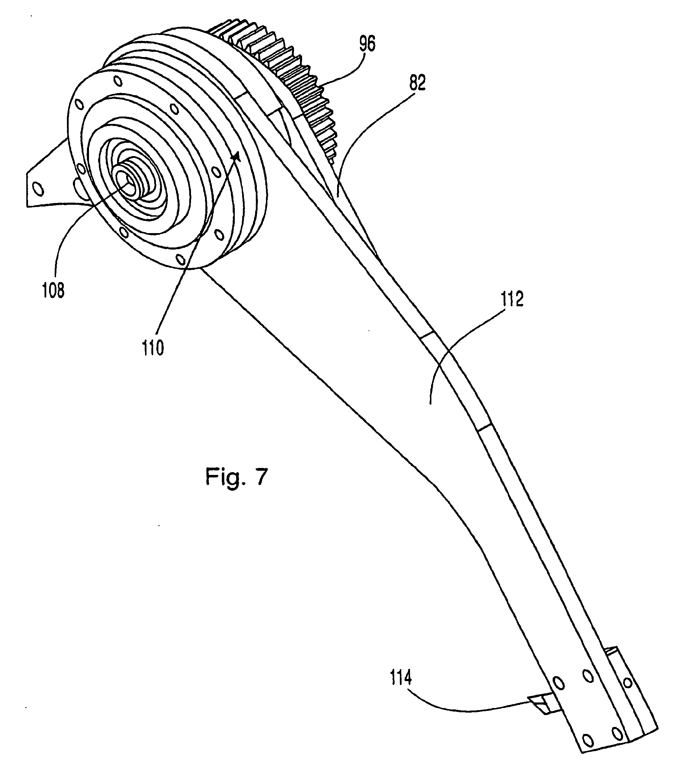

The planetary gear 96 of the cutting arrangement 84 is in mesh with the independent ring gear 90. As can be appreciated, planetary gear 96 is forced to rotate about the independent ring gear 90 with rotation of the base tube 80. If the independent ring gear 90 is rotated at the same speed as the rotating base tube 80 there will be no rotation of the planetary gear 96. By controlling of the rotation of the independent ring gear 90 relative to the base tube 80, the rotation of the planetary gear 96 is controlled. This planetary gear rotates the pivot shaft 108 that is attached to a gear box reduction arrangement 110 and eventually controls rotation of the support arm 112 about the pivot shaft 108. With this arrangement, the position of the cutting tool 114 relative to the pipe is controlled. These elements are best shown in Figures 5 and 7.

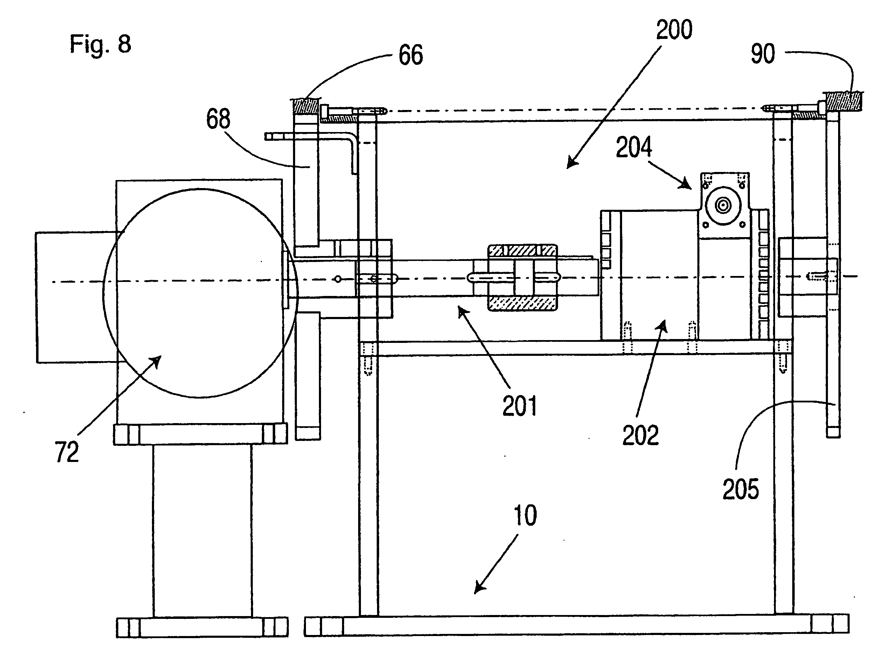

In a second embodiment shown in Figure 8, an alternate drive arrangement 200 is disclosed. This drive arrangement 200 includes a drive motor 72 connected by drive shaft 201 to the variable differential drive 202. The variable differential drive 202 includes a driven gear 205 in mesh with ring gear 90. A stepper motor 204 is used to control rotation of ring gear 90 relative to drive gear 66. Variation in the relative rotation of gears 66 and 90 is used to control pivoting of the support arm 112 and thus the cutting process. Ring gear 90 and drive gear 66 generally rotate at the same speed. The stepper motor is controlled to advance or retard rotation of ring gear 90 relative to drive gear 66 to thereby control the position of the support arms of the cutting arrangement. The variable differential drive 202 used in the second embodiment is less expensive than the second drive motor used in the first embodiment.

Figures 3 and 4 illustrate the precision achieved between two cuts of the pipe while the pipe remains clamped. In Figure 3, the cutting tool 114 is about to cut the pipe to produce the cut line 116. This will allow pipe section 120 to be separated from the pipe section 122. The pipe section 120 includes the bell mouth connector 124. The rotating base drum 80 is rotated at the desired speed to perform a cut with the cutting tool 114. The advancement of the cutting tool 114 through the pipe is effectively controlled by the speed of the independent ring gear 90 relative to the rotating speed of the base tube 80. Once this cut 116 has been accomplished, pipe section 120 is essentially free. Often, on the downstream end of this section there is a pipe puller which will cause a separation of section 120 from section 122. Section 122 continues to move at the production speed of the extrusion device.

In Figure 4, a second cut line has been completed to remove the scrap portion 126. The second cut line is generally shown as 128. In Figure 4 it can be seen that the rotating cutter 6 has been moved towards the pipe clamp arrangement 4 while the pipe clamp arrangement 4 maintains engagement with the pipe section 122. This change in position is possible due to movement of the first slidable table 14 relative to the second slidable table 16 controlled by the actuator cylinder 139 connected therebetween. Once the rotating cutter is positioned at the second position it can go through its normal cutting function to force the cutting tool 114 to produce a second cut. This arrangement provides excellent control on the position of the two cuts in the pipe as the pipe section 122 continues to be clamped. With this arrangement, it can be seen that the bell mouth connector 124 is effectively formed and the pipe section 122 has been cut to expose an insert end portion 129 that can now be received within a bell mouth connector 124.

Actuator cylinder 139 is one example of an activator for positive control of the relative position of the first and second slidable tables. This activator is preferably connected to a controller 141. The controller 141 is also connected to a pipe feed sensor 143 that monitors the speed of pipe as it is advanced towards the pipe cutting apparatus 2. This sensor 143 preferably also identifies a pipe coupling. In corrugated pipe, the sensor recognizes each corrugation and the absence of corrugations indicates a pipe coupling. This information is used by the controller to appropriately adjust the slidable tables and thereby determine the cut positions. The controller 141 can include preprogrammed cut procedures for different diameter of pipes and locations of couplers. The controller can also adjust the motor drives for appropriately positioning and controlling the cutting arrangement including the support arm. As can be appreciated, the position of pipe couplings is typically known by the overall extrusion system.

With this arrangement adjustment of the cutting apparatus by the operator is simplified and the cutting apparatus can also be adjusted as part of the overall production control. For example, cutting extruded pipe to specific lengths is easily programmed and executed. The need for the operator to have significant setup expertise is reduced.

Figures 5, 6 and 7 provide additional details with respect to the rotating cutter 6.

The independent ring gear 90, as shown in Figure 5, is controlled due to engagement with drive gear 100 controlled by the motor drive 98. The rotational speed of the rotating drum 80 is determined by the motor 72 that through a belt drive and gear arrangement, controls the speed of the large drive gear 66. It can also be seen that the first slide table 14 is secured above the machine base 10 by the slide block 19.

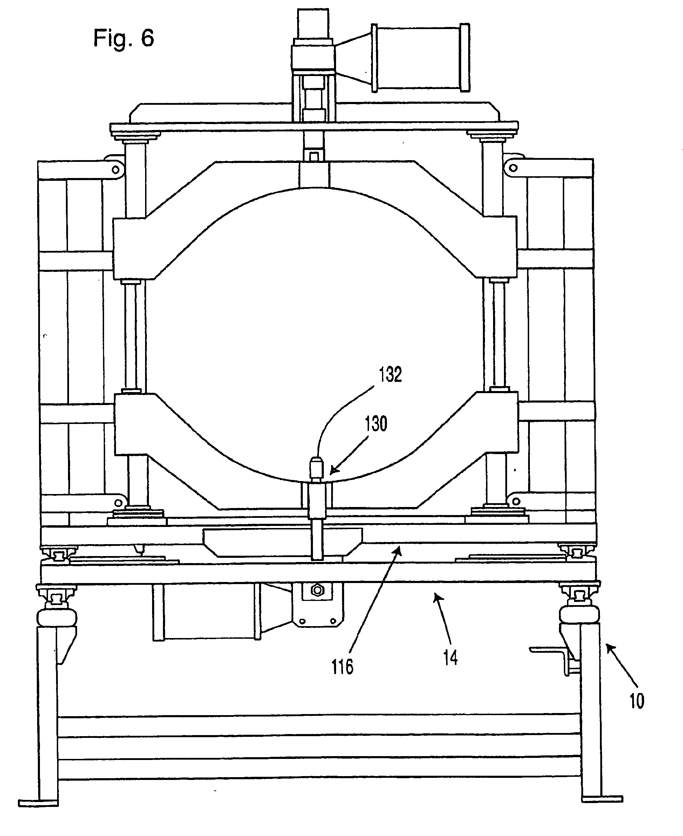

Figure 5 also shows the positioning plunger 130 that has an end portion 132 for engagement between two corrugations of a corrugated pipe. This plunger can be used to initially engage and align with a particular pipe corrugation and thereby effectively indexes the pipe on the plunger. The clamping arrangement then clamps the precisely located pipe and holds the pipe in this desired indexed position. The subsequent controlled movement of the first and second tables allows for precise cutting of the corrugated pipe or the corrugated pipe with a coupling segment, at precision locations. Additional details of this arrangement are shown in Figure 6.

Figure 6 perhaps provides the best view of the slidable first table and second table.

Figure 7 illustrates a number of components of the cutting arrangement 84 including the support arm 112 that is pivotally mounted to the mounting bracket 82. As previously described, the planetary gear 96 is in mesh with the independent ring gear 90 and depending upon the direction of rotation of planetary gear 96 about the pivot shaft 108, the position of the support arm 112 will change. To provide improved accuracy and control with respect to the position of the support arm 112 relative to the mounting bracket, a reduction gear box 110 is provided, whereby a rotation of gear 96 causes a much reduced rotation of the support arm 112. The support arm 112 also acts as a lever with the cutting tool 114 being provided at the end of the lever. A gear reduction of at least 15 to 1 and preferably 50 to 1 or greater can be used.

The initial position of the lever and the cutting tool 114 is easily adjusted for different sizes of pipe merely by rotation of the independent ring gear with the rotating base tube remaining stationary. Thus, the initial position of the cutting tool relative to a particular diameter of pipe is easily adjusted. In the preferred embodiment as shown in the drawings, only one cutter is rotated about the pipe for cutting through the pipe. This provides excellent control of the location of the cut line and better control of the cutting process. In addition, the actual speed of rotation of the rotating base tube 80 can be adjusted for providing a desired cutting speed of the cutting tool 114. This is helpful to controlling the cutting speed for different pipe sizes.

The rate of advancement of the cutting tool 114 into the pipe is also controllable in a precise manner due to the reduction gear box and the ability to control the relative rotation of the base tube 80 and the independent ring gear 90. The relative speeds are intermittently varied to pivot the support arm of the cutting arrangement. When the speeds are equal there is no pivoting of the support arm. Changing of the relative speeds is similar to a phase change. It has been found that the cantilevered support arm 112 and the use of a reduction gear box within the support arm provides excellent control of the position of the support arm and also allows effective adjustment of the cutting arrangement for cutting of extruded pipe over a large range of diameters.

Although various preferred embodiments of the present invention have been described herein in detail, it will be appreciated by those skilled in the art, that variations may be made thereto without departing from the scope of the appended claims.

## Claims

1. Pipe cutting apparatus (2) comprising
a machine base (10) having a first machine table (14) slidably secured in the direction for moving with a pipe during the extrusion thereof;
said first machine table (14) supporting a base tube (80) rotatably mounted on said first machine table (14) and positioned to allow a pipe to pass through said base tube (80);
a rotatable drive for said base tube (80) for rotating said base tube (80) about a longitudinal axis thereof;
at least one cutting arrangement (84);
each cutting arrangement (84) including
a mounting bracket (82) attached to said base tube (80) at a peripheral position,
a support arm (112) having a pivot shaft (108) connecting said support arm (112) to said mounting bracket (82) and a drive gear secured on said pivot shaft(108),
said support arm (112) including a pipe cutting tool (114) at an end of said support arm (112) spaced from said pivot shaft(108), and
a drive arrangement in engagement with said drive gear of said support arm (112) for controlling pivoting movement of the support arm (112) in a pipe cutting procedure coordinated with the rotation of said base tube (80) to cause said cutting tool (114) to cut the pipe into two pipe segments,
wherein said drive arrangement includes a ring gear (90) rotatably mounted and coaxial with said base tube (80), said ring gear (90) being rotatably driven relative to said rotatable drive of said base tube (80) to cause said support arm (112) to pivot and move said cutting tool (114) during said pipe cutting procedure from a dear position to a pipe cut position and returning said cutting tool (114) to said clear position,
**characterized in that**
a pipe clamp arrangement (4) is aligned with and to one side of said base tube (80) for clamping of a pipe during a pipe cutting procedure, and
each support arm (112) includes a gear box reduction arrangement (110) in mesh with said ring gear for controlling said pivoting of said support arm (112) of each cutting arrangement (84).

2. Pipe cutting apparatus of claim 1 wherein said ring gear includes a separate motor drive coordinated with the rotatable drive of said base tube (80) and using a speed differential to control the position of said support arm (112) of each cutting arrangement (84).

3. Pipe cutting apparatus of claim 1 or claim 2 wherein said ring gear is rotatably mounted on said base tube (80).

4. Pipe cutting apparatus of anyone of claims 2 or claim 3 wherein said motor drive of said ring gear and said rotatable drive of said base tube (80) are coordinated and the relative speeds of said motor drive of said ring gear and said rotatable drive of said base tube (80) are intermittently varied to cause said pivoting of said support arm (112) of each cutting arrangement (84) during said cutting procedure.

5. Pipe cutting apparatus of anyone of claims 1 to 4 wherein said ring gear includes a separate motor drive; wherein said motor drive of said ring gear and said rotatable drive of said base tube (80) are coordinated and the relative speeds of said motor drive of said ring gear and said rotatable drive of said base tube (80) are intermittently varied to cause said pivoting of each support arm (112) during said cutting procedure.

6. Pipe cutting apparatus of claim 5 wherein said rotatable drive of said base tube (80) and said motor drive of said ring gear are driven to generally synchronize the rotational speed of said ring gear and said base tube (80) with intermittent controlled variations in these rotational speeds causing said pivoting of each support arm (112).

7. Pipe cutting apparatus of anyone of claims 1 to 6 wherein said pipe clamp arrangement (4) is supported by a second slidable (16) table mounted on said first slidable table (14) and including an adjustable activator connecting said first and second slidable tables (14, 16).

8. Pipe cutting apparatus of claim 7 wherein said adjustable actuator is programmable for cutting of said pipe in two or more predetermined positions.

9. Pipe cutting apparatus of claim 7 or claim 8 including a pipe locating device for positioning said pipe in said pipe cutting apparatus (2) for cutting of said pipe in at least one predetermined position; said pipe locating device determining the position of the pipe relative to each cutting arrangement (84) for cutting at said at least one predetermined position.

10. Pipe cutting apparatus of claims anyone of 7 to 9 wherein said pipe locating device is mounted on said second slidable table (16) and said first slidable table (14) is moved relative to said second slidable table (16) for cutting of said pipe in a second predetermined position.

11. Pipe cutting apparatus of anyone of claims 7 to 10 including a computer controlled activator connecting and controlling said slidable tables (14, 16), said computer controlled activator positioning said second slidable table (16) relative to said first slidable table (14) for cutting of said pipe in a second predetermined position.

12. Pipe cutting apparatus of any preceding claim wherein said gear box reduction arrangement has a reduction of at least 15 to 1.

13. Pipe cutting apparatus of claim 12 wherein said gear box reduction arrangement has a reduction of at least 50 to 1.

14. Pipe cutting apparatus of claim 1 wherein said rotatable drive of said base tube (80) includes a base tube ring gear in mesh with a drive gear rotatably driven by a base tube drive motor.

15. Pipe cutting apparatus of claim 14 wherein said drive arrangement includes a variable differential drive driven by said rotatable drive of said base tube (80); said variable differential drive including a stepper motor that varies said differential drive to thereby control said pivoting movement of each support arm (112).

16. Pipe cutting apparatus of anyone of claims 1 or 8 to 12 wherein said drive arrangement includes a variable differential drive driven by said rotatable drive of said base tube (80).

## Patentansprüche

1. Rohrschneidevorrichtung (2), aufweisend:
eine Maschinenbasis (10) mit einem ersten Maschinentisch (14), der in der Richtung einer Bewegung zusammen mit einem Rohr während der Extrusion desselben verschiebbar angebracht ist;
wobei der erste Maschinentisch (14) ein Basisrohr (80) abstützt, das an dem ersten Maschinentisch (14) rotationsbeweglich angebracht ist und derart positioniert ist, dass sich ein Rohr durch das Basisrohr (80) hindurch bewegen kann;
einen Rotationsantrieb für das Basisrohr (80) zum rotationsmäßigen Bewegen des Basisrohrs (80) um eine Längsachse desselben;
mindestens eine Schneidanordnung (84);
wobei jede Schneidanordnung (84) Folgendes aufweist:
eine Befestigungskonsole (82), die an dem Basisrohr (80) an einer peripheren Position angebracht ist,
einen Tragarm (112) mit einer Schwenkachse (108), die den Tragarm (112) mit der Befestigungskonsole (82) verbindet, und mit einem auf der Schwenkachse (108) befestigten Antriebszahnrad,
wobei der Tragarm (112) ein Rohrschneidwerkzeug (114) an einem von der Schwenkachse (108) beabstandeten Ende des Tragarms (112) besitzt, und
eine Antriebsanordnung in Eingriff mit dem Antriebszahnrad des Tragarms (112) zum Steuern der Schwenkbewegung des Tragarms (112) in einem Rohrschneidvorgang in koordinierter Weise mit der Rotation des Basisrohrs (80), um das Schneidwerkzeug (114) zu veranlassen, das Rohr in zwei Rohrsegmente zu zerschneiden,
wobei die Antriebsanordnung ein Hohlrad (90) aufweist, das drehbar angebracht ist sowie koaxial mit dem Basisrohr (80) ist, wobei das Hohlrad (90) relativ zu dem Rotationsantrieb des Basisrohrs (80) rotationsmäßig angetrieben wird, um eine Schwenkbewegung des Tragarms (112) zu veranlassen und das Schneidwerkzeug (114) während des Rohrschneidvorgangs von einer beabstandeten Position in eine Rohrschneidposition zu bewegen sowie das Schneidwerkzeug (114) in die beabstandete Position zurückzuführen,
**dadurch gekennzeichnet,**
**dass** eine Rohrklemmanordnung (4) mit dem Basisrohr (80) sowie zu einer Seite desselben ausgerichtet ist, um ein Rohr während eines Rohrschneidvorgangs festzuklemmen, und
**dass** jeder Tragarm (112) eine Getriebeuntersetzungsanordnung (110) in Eingriff mit dem Hohlrad aufweist, um die Schwenkbewegung des Tragarms (112) jeder Schneidanordnung (84) zu steuern.

2. Rohrschneidevorrichtung nach Anspruch 1,
wobei das Hohlrad einen separaten Motorantrieb aufweist, der mit dem Rotationsantrieb des Basisrohrs (80) koordiniert ist und ein Geschwindigkeitsdifferential zum Steuern der Position des Tragarms (112) jeder Schneidanordnung (84) verwendet.

3. Rohrschneidevorrichtung nach Anspruch 1 oder Anspruch 2,
wobei das Hohlrad an dem Basisrohr (80) drehbar angebracht ist.

4. Rohrschneidevorrichtung nach einem der Ansprüche 2 oder 3,
wobei der Motorantrieb des Hohlrads und der Rotationsantrieb des Basisrohrs (80) aufeinander abgestimmt sind und die relativen Geschwindigkeiten des Motorantriebs des Hohlrads und des Rotationsantriebs des Basisrohrs (80) in intermittierender Weise variiert werden, um die Schwenkbewegung des Tragarms (112) jeder Schneidanordnung (84) während des Schneidvorgangs zu veranlassen.

5. Rohrschneidevorrichtung nach einem der Ansprüche 1 bis 4,
wobei das Hohlrad einen separaten Motorantrieb aufweist;
wobei der Motorantrieb des Hohlrads und der Rotationsantrieb des Basisrohrs (80) koordiniert sind und die relativen Geschwindigkeiten des Motorantriebs des Hohlrads und des Rotationsantriebs des Basisrohrs (80) in intermittierender Weise variiert werden, um die Schwenkbewegung des Tragarms (112) während des Schneidvorgangs zu veranlassen.

6. Rohrschneidevorrichtung nach Anspruch 5,
wobei der Rotationsantrieb des Basisrohrs (80) und der Motorantrieb des Hohlrads derart angetrieben werden, dass die Rotationsgeschwindigkeit des Hohlrads und des Basisrohrs (80) im Wesentlichen synchronisiert ist, wobei intermittierende gesteuerte Änderungen bei diesen Rotationsgeschwindigkeiten die Schwenkbewegung des jeweiligen Tragarms (112) veranlassen.

7. Rohrschneidevorrichtung nach einem der Ansprüche 1 bis 6,
wobei die Rohrklemmanordnung (4) durch einen zweiten verschiebbaren Tisch (16) abgestützt ist, der an dem ersten verschiebbaren Tisch (14) angebracht ist und eine verstellbaren Betätigungseinrichtung aufweist, die den ersten und den zweiten verschiebbaren Tisch (14, 16) miteinander verbindet.

8. Rohrschneidevorrichtung nach Anspruch 7,
wobei die verstellbare Betätigungseinrichtung zum Schneiden des Rohrs an zwei oder mehr vorbestimmten Positionen programmierbar ist.

9. Rohrschneidevorrichtung nach Anspruch 7 oder Anspruch 8,
mit einer Rohrfestlegevorrichtung zum Positionieren des Rohrs in der Rohrschneidevorrichtung (2) zum Schneiden des Rohrs an mindestens einer vorbestimmten Position; wobei die Rohrfestlegevorrichtung die Position des Rohrs relativ zu jeder Schneidanordnung (84) festgelegt, um den Schneidvorgang an der mindestens einen vorbestimmten Position auszuführen.

10. Rohrschneidevorrichtung nach einem der Ansprüche 7 bis 9,
wobei die Rohrfestlegevorrichtung an dem zweiten verschiebbaren Tisch (16) angebracht ist und der erste verschiebbare Tisch (14) relativ zu dem zweiten verschiebbaren Tisch (16) bewegt wird, um das Rohr an einer zweiten vorbestimmten Position zu schneiden.

11. Rohrschneidevorrichtung nach einem der Ansprüche 7 bis 10,
mit einer computergesteuerten Betätigungseinrichtung, die die verschiebbaren Tische (14, 16) verbindet und steuert, wobei die computergesteuerte Betätigungseinrichtung den zweiten verschiebbaren Tisch (16) relativ zu dem ersten verschiebbaren Tisch (14) zum Schneiden des Rohrs an einer zweiten vorbestimmten Position positioniert.

12. Rohrschneidevorrichtung nach einem der vorausgehenden Ansprüche,
wobei die Getriebeuntersetzungsanordnung eine Untersetzung von mindestens 15 zu 1 aufweist.

13. Rohrschneidevorrichtung nach Anspruch 12,
wobei die Getriebeuntersetzungsanordnung eine Untersetzung von mindestens 50 zu 1 aufweist.

14. Rohrschneidevorrichtung nach Anspruch 1,
wobei der Rotationsantrieb des Basisrohrs (80) ein Basisrohr-Hohlrad aufweist, das mit einem Antriebszahnrad kämmt, das von einem Basisrohr-Antriebsmotor rotationsmäßig angetrieben wird.

15. Rohrschneidevorrichtung nach Anspruch 14,
wobei die Antriebsanordnung einen variablen Differentialantrieb aufweist, der von dem Rotationsantrieb des Basisrohrs (80) angetrieben wird; wobei der variable Differentialantrieb einen Schrittmotor aufweist, der den Differentialantrieb variiert, um **dadurch** die Schwenkbewegung jedes Tragarms (112) zu steuern.

16. Rohrschneidevorrichtung nach einem der Ansprüche 1 oder 8 bis 12,
wobei die Antriebsanordnung einen variablen Differentialantrieb aufweist, der von dem Rotationsantrieb des Basisrohrs (80) angetrieben wird.

## Revendications

1. Appareil de coupe de tuyaux (2) comprenant
une base de machine (10) comportant une première table de machine (14) fixée de manière coulissante dans la direction de déplacement avec un tuyau pendant l'extrusion de celui-ci ;
ladite première table de machine (14) supportant un tube de base (80) monté en rotation sur ladite première table de machine (14) et positionné pour permettre à un tuyau de passer à travers ledit tube de base (80) ;
un entraînement rotatif pour ledit tube de base (80) destiné à faire tourner ledit tube de base (80) autour d'un axe longitudinal de celui-ci ;
au moins une disposition de coupe (84) ;
chaque disposition de coupe (84) comprenant
un support de montage (82) fixé audit tube de base (80) au niveau d'une position périphérique,
un bras de support (112) comportant un axe de pivot (108) raccordant ledit bras de support (112) audit support de montage (82) et un pignon d'entraînement fixé sur ledit axe de pivot (108),
ledit bras de support (112) comportant un outil de coupe de tuyaux (114) au niveau d'une extrémité dudit bras de support (112) espacé dudit axe de pivot (108), et
une disposition d'entraînement en prise avec ledit pignon d'entraînement dudit bras de support (112) destinée à commander le mouvement de pivot du bras de support (112) dans une procédure de coupe de tuyaux coordonnée avec la rotation dudit tube de base (80) pour amener ledit outil de coupe (114) à couper le tuyau en deux segments de tuyaux,
dans lequel ladite disposition d'entraînement comprend une couronne (90) montée en rotation et coaxiale par rapport audit tube de base (80), ladite couronne (90) étant entraînée en rotation par rapport audit entraînement rotatif dudit tube de base (80) pour amener ledit bras de support (112) à pivoter et à déplacer ledit outil de coupe (114) pendant ladite procédure de coupe de tuyaux d'une position dégagée à une position de coupe de tuyaux et ramenant ledit outil de coupe (114) à ladite position dégagée,
**caractérisé en ce que**
une disposition de serrage de tuyaux (4) est alignée avec et sur un côté dudit tube de base (80) pour serrer un tuyau pendant une procédure de coupe de tuyaux, et
chaque bras de support (112) comprend une disposition de réduction de boîte d'engrenages (110) en prise avec ladite couronne pour commander ledit pivotement dudit bras de support (112) de chaque disposition de coupe (84).

2. Appareil de coupe de tuyaux selon la revendication 1, dans lequel ladite couronne comprend un entraînement par moteur séparé coordonné avec l'entraînement rotatif dudit tube de base (80) et utilisant un différentiel de vitesse pour commander la position dudit bras de support (112) de chaque disposition de coupe (84).

3. Appareil de coupe de tuyaux selon la revendication 1 ou la revendication 2, dans lequel ladite couronne est montée en rotation sur ledit tube de base (80).

4. Appareil de coupe de tuyaux selon l'une quelconque des revendications 2 ou 3, dans lequel ledit entraînement par moteur de ladite couronne et ledit entraînement rotatif dudit tube de base (80) sont coordonnés et les vitesses relatives dudit entraînement par moteur de ladite couronne et dudit entraînement rotatif dudit tube de base (80) varient par intermittence pour provoquer ledit pivotement dudit bras de support (112) de chaque disposition de coupe (84) pendant ladite procédure de coupe.

5. Appareil de coupe de tuyaux selon l'une quelconque des revendications 1 à 4, dans lequel ladite couronne comprend un entraînement par moteur séparé ; dans lequel ledit entraînement par moteur de ladite couronne et ledit entraînement rotatif dudit tube de base (80) sont coordonnés et les vitesses relatives dudit entraînement par moteur de ladite couronne et dudit entraînement rotatif dudit tube de base (80) varient par intermittence pour provoquer ledit pivotement de chaque bras de support (112) pendant ladite procédure de coupe.

6. Appareil de coupe de tuyaux selon la revendication 5, dans lequel ledit entraînement rotatif dudit tube de base (80) et ledit entraînement par moteur de ladite couronne sont entraînés pour synchroniser généralement la vitesse de rotation de ladite couronne et dudit tube de base (80) avec les variations commandées par intermittence des vitesses de rotation provoquant ledit pivotement de chaque bras de support (112).

7. Appareil de coupe de tuyaux selon l'une quelconque des revendications 1 à 6, dans lequel ladite disposition de serrage de tuyaux (4) est supportée par une deuxième table coulissante (16) montée sur ladite première table coulissante (14) et comprenant un actionneur ajustable raccordant lesdites première et deuxième tables coulissantes (14, 16).

8. Appareil de coupe de tuyaux selon la revendication 7, dans lequel ledit actionneur ajustable est programmable pour la coupe dudit tuyau au niveau de deux positions prédéterminées ou plus.

9. Appareil de coupe de tuyaux selon la revendication 7 ou la revendications 8, comprenant un dispositif de placement de tuyaux destiné à positionner ledit tuyau dans ledit appareil de coupe de tuyaux (2) pour couper ledit tuyau au niveau d'au moins une position prédéterminée ; ledit dispositif de placement de tuyaux déterminant la position du tuyau par rapport à chaque disposition de coupe (84) pour la coupe au niveau de ladite au moins une position prédéterminée.

10. Appareil de coupe de tuyaux selon l'une quelconque des revendications 7 à 9, dans lequel ledit dispositif de placement de tuyaux est monté sur ladite deuxième table coulissante (16) et ladite première table coulissante (14) est déplacée par rapport à ladite deuxième table coulissante (16) pour la coupe dudit tuyau au niveau d'une deuxième position prédéterminée.

11. Appareil de coupe de tuyaux selon l'une quelconque des revendications 7 à 10, comprenant un actionneur commandé par ordinateur raccordant et commandant lesdites tables coulissantes (14, 16), ledit actionneur commandé par ordinateur positionnant ladite deuxième table coulissante (16) par rapport à ladite première table coulissante (14) pour la coupe dudit tuyau au niveau d'une deuxième position prédéterminée.

12. Appareil de coupe de tuyaux selon l'une quelconque des revendications précédentes, dans lequel ladite disposition de réduction de boîte d'engrenages présente une réduction d'au moins 15/1.

13. Appareil de coupe de tuyaux selon la revendication 13, dans lequel la disposition de réduction de boîte d'engrenages présente une réduction d'au moins 50/1.

14. Appareil de coupe de tuyaux selon la revendication 1, dans lequel ledit entraînement rotatif dudit tube de base (80) comprend une couronne de tube de base en prise avec un pignon d'entraînement entraîné en rotation par un moteur d'entraînement de tube de base.

15. Appareil de coupe de tuyaux selon la revendication 14, dans lequel ladite disposition d'entraînement comprend un entraînement différentiel variable entraîné par ledit entraînement rotatif dudit tube de base (80) ; ledit entraînement différentiel variable comprenant un moteur pas à pas qui fait varier ledit entraînement différentiel pour de se fait commander le mouvement de pivot de chaque bras de support (112).

16. Appareil de coupe de tuyaux selon l'une quelconque des revendications 1 ou 8 à 12, dans lequel ladite disposition d'entraînement comprend un entraînement différentiel variable entraîné par ledit entraînement rotatif dudit tube de base (80).
